# EUROPEAN PATENT APPLICATION

(11) **EP 4 775 491 A1**
(43) Date of publication of application: **15.07.2026**
(21) Application number: 25215488.5
(22) Date of filing: 13.11.2025
(51) Int. Cl.: B64D 11/02

(54) **SYSTEMS AND METHODS FOR HARVESTING ENERGY FROM A FLUSH CYCLE OF A TOILET**

(30) Priority: 10.01.2025 US 202519016008
(71) Applicant: The Boeing Company, Arlington, VA 22202 (US)
(72) Inventor: MCINTOSH, Darren C., Arlington, 22202 (US)
(74) Representative: Boult Wade Tennant LLP

(57) **Abstract**

A system includes a toilet, and an energy harvester coupled to the toilet. The energy harvester is configured to convert vacuum force, which flushes contents from the toilet, into electrical energy. The energy harvester is further configured to provide the electrical energy to one or more components.

## Description

### FIELD OF THE DISCLOSURE

Examples of the present disclosure generally relate to systems and methods for harvesting energy from a flush cycle of a toilet, such as within a lavatory of a vehicle.

### BACKGROUND OF THE DISCLOSURE

Vehicles such as commercial aircraft are used to transport passengers between various locations. A typical commercial aircraft includes an internal cabin having one or more lavatories.

A typical lavatory within an internal cabin of a commercial aircraft includes a toilet coupled to a powerful vacuum flush (suction) system. Certain components within the lavatory include disposable batteries used to provide power to motors and pumps. Examples of such components include automatic paper towel dispensers, automatic soap dispensers, automatic waste container flaps, and automatic toilet lids.

As can be appreciated, the batteries for such components are periodically changed. The used batteries then need to be disposed in an environmentally-friendly manner.

As another option, the components can be powered through main or auxiliary power sources onboard the aircraft. However, such an option necessarily adds to the overall power draw of the aircraft.

### SUMMARY OF THE DISCLOSURE

A need exists for a system and a method for efficiently and effectively powering certain components within a lavatory of an aircraft. Further, a need exists for a system and a method which eliminate, minimize, or otherwise reduce the need for batteries to power certain components. Additionally, a need exists for a system and a method for providing power to components within an aircraft, which do not increase the overall power draw of main and/or auxiliary power sources of the aircraft.

With those needs in mind, certain examples of the present disclosure provide a system including a toilet, and an energy harvester coupled to the toilet. The energy harvester is configured to convert vacuum force, which flushes contents from the toilet, into electrical energy. In at least one example, the energy harvester is further configured to provide the electrical energy to one or more components.

The system can also include a wired connection between the energy harvester and the one or more components. The one or more components can include one or more of one or more motors, one or more pumps, one or more sensors, one or more lights, one or more chargers, and/or one or more energy storage devices.

In at least one example, the system also includes a vacuum flush system coupled to the toilet. The vacuum flush system is configured to generate the vacuum force.

In at least one example, the energy harvester includes a fan turbine, and a generator coupled to the fan turbine. The energy harvester can be disposed within a conduit secured to a wall. The energy harvester can include a housing secured to the toilet. In at least one example, the toilet includes a lid, which can include the energy harvester.

Certain examples of the present disclosure include a vehicle including an internal cabin, and a lavatory within the internal cabin. The lavatory includes a toilet, and an energy harvester coupled to the toilet. The energy harvester is configured to convert vacuum force, which flushes contents from the toilet, into electrical energy. The energy harvester is further configured to provide the electrical energy to one or more components.

Certain examples of the present disclosure provide a method including converting, by the energy harvester, vacuum force, which flushes contents from the toilet, into electrical energy. In at least one example, the method also includes providing, by the energy harvester, the electrical energy to one or more components.

### BRIEF DESCRIPTION OF THE DRAWINGS

Figure 1 illustrates a block diagram of a system within a lavatory of an internal cabin of a vehicle, according to an example of the present disclosure.
Figure 2 illustrates a simplified schematic diagram of the system of Figure 1, according to an example of the present disclosure.
Figure 3 illustrates a front view of an energy harvester, according to an example of the present disclosure.
Figure 4 illustrates an internal view of the lavatory, according to an example of the present disclosure.
Figure 5 illustrates an internal view of the lavatory, according to an example of the present disclosure.
Figure 6 illustrates an internal view of the lavatory having a lid of a toilet in an open position, according to an example of the present disclosure.
Figure 7 illustrates an internal view of the lavatory of Figure 6 having the lid of the toilet in a closed position.
Figure 8 illustrates a perspective front view of an aircraft, according to an example of the present disclosure.
Figure 9 illustrates a perspective interior view of an internal cabin of an aircraft, according to an example of the present disclosure.
Figure 10 illustrates an isometric internal view of a lavatory, according to an example of the present disclosure.
Figure 11 illustrates a flow chart of a method, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide a simple power source which can eliminate, minimize, or otherwise reduce the need for batteries for certain components within an aircraft, while also not adding to the overall power draw of main or auxiliary power sources of the aircraft. As another example, the power source can be configured to charge batteries of the components. The systems and methods described herein harvest energy generated by a vacuum flush system coupled to a toilet. The harvested energy is used to provide power to one or more components, such as one or more lights, one or more motors, one or more pumps, one or more sensors, one or more chargers, one or more energy storage devices, and/or the like. The systems and methods described herein are environmentally friendly (eliminate the need for batteries, which would otherwise be disposed of after use, or optionally charge the batteries), and make use of an untapped energy source (that is, the vacuum flush system).

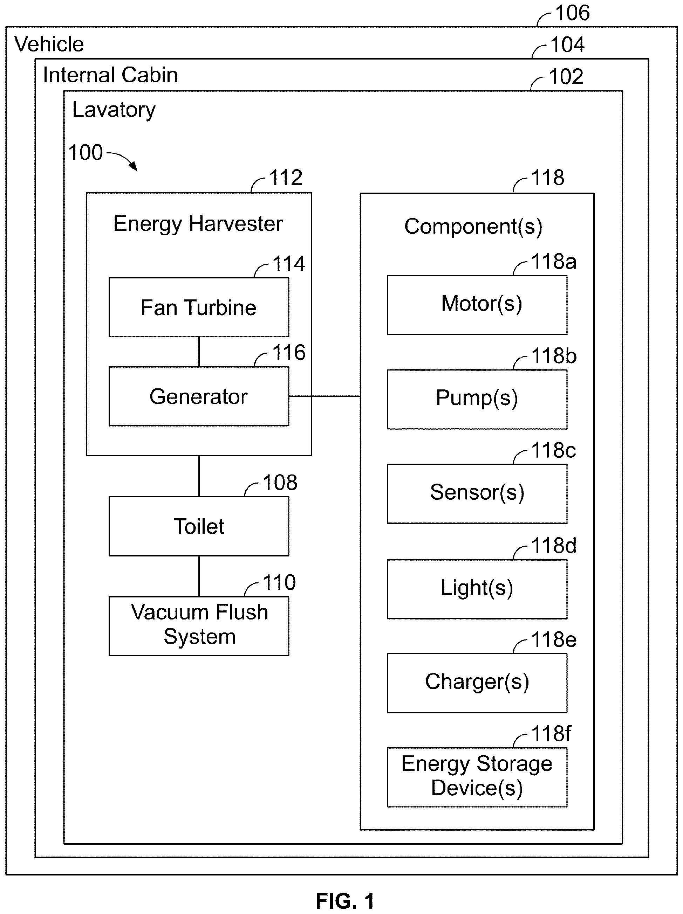

Figure 1 illustrates a block diagram of a system 100 within a lavatory 102 of an internal cabin 104 of a vehicle 106, according to an example of the present disclosure. In at least one example, the vehicle 106 is a commercial aircraft. In other examples, the vehicle 106 is a landbased vehicle, such as a bus, train car, or the like. In other examples, the vehicle 106 is a waterbased vehicle, such as a boat or a ship. In other examples, the vehicle 106 is a spacecraft. In some examples, the system 100 can be used with fixed structures, such as within residential or commercial buildings.

The lavatory 102 includes a toilet 108 coupled to a vacuum flush system 110. When the toilet 108 is flushed, the vacuum flush system 110 draws contents out of a basin of the toilet 108 through vacuum (suction) force.

The system 100 includes an energy harvester 112 coupled to the toilet 108. The energy harvester 112 includes a fan turbine 114 coupled to a generator 116. In operation, the generator 116 converts mechanical energy, such as rotary motion of the fan turbine 114, into electrical energy. In some examples, the energy harvester 112 includes one or more baffles coupled to a generator. The energy harvester 112 includes one or more bellows coupled to a generator in some examples. In other examples, the energy harvester 112 includes one or more flaps pivotally coupled to a generator. The generator 116 can include one or more magnets, one or more electromagnets, one or more metallic brushes, one or more metallic fibers, and/or the like configured to move and generate electrical energy in response to movement, such as caused by the fan turbine 114.

The generator 116 is, in turn, coupled to one or more component(s) 118, such as through a wired or wireless connection. The component(s) 118 can be within the lavatory 102. Examples of the components 118 include, but are not limited to, one or more motors 118a, one or more pumps 118b, one or more sensors 118c, one or more lights 118d, one or more chargers 118e, and/or one or more energy storage devices 118f.

As an example, a motor 118a can be coupled to a lid (for example, a pivotal cover) of the toilet 108 and configured to automatically open and close the lid. As another example, a motor 118a can be within a paper towel dispenser and configured to automatically dispense paper towels. Energy generated by the energy harvester 112 is used to provide power to the motor(s) 118a.

As an example, a pump 118b can be within an automated soap dispenser. As another example, a pump 118b can be within a water delivery or removal system. Energy generated by the energy harvester 112 is used to provide power to the pump(s) 118b.

As an example, a sensor 118c can be an infrared or ultrasonic proximity sensor used to detect motion. The motion can be used to operate a soap dispenser, a flush of a toilet, a paper towel dispenser, open/close a toilet seat/lid, open a waste flap, and/or the like in a touchless manner. Energy generated by the energy harvester 112 is used to provide power to the sensor(s) 118c.

In some examples, the lavatory 102 includes one or more lights 118d used to illuminate an interior of the lavatory 102. In other examples, the lights 118d can include emergency lighting within the internal cabin 104. In other examples, the lights 118d can be used to illuminate signs within the lavatory 102 and/or the internal cabin 104, such as exit signs, location signs, seating signs, and/or the like. Energy generated by the energy harvester 112 can be used to provide power to the light(s) 118d.

As an example, a charger 118e can be a charging station for a smart phone or tablet. As another example, a charger 118e can be used to charge one or more other components 118 within or outside of the lavatory 102. Energy generated by the energy harvester 112 is used to provide power to the charger(s) 118e.

As an example, an energy storage device 118f can be one or more batteries within one or more other components 118. As another example, an energy storage device 118f can be for another device other than the components 118. The energy storage device 118f can be charged via the energy harvester 112.

As shown, the component(s) 118 can be within the lavatory 102. As another example, the component(s) 118 can be within the internal cabin 104, but outside of the lavatory 102.

In operation, when the toilet 108 is flushed, the vacuum flush system 110 generates vacuum force which draws contents out of a basin of the toilet 108 into a fluid conduit, which is in fluid communication with a waste tank, for example. The fan turbine 114 of the energy harvester 112 is in fluid communication with the basin of the toilet 108, such as via one or more ducts, or an open air space. The vacuum force generated by the vacuum flush system 110 causes the fan turbine 114 to rotate. The rotation of the fan turbine 114, in turn, causes the generator 116 (such as can be directly coupled to the fan turbine 114) to convert the mechanical energy of the rotating fan turbine into electrical energy, which is then used to provide energy to the component(s) 118.

In at least one example, the generator 116 is connected to the component(s) 118 through a dedicated wired connection. The wired connection can be fixed, or removable (such as a plug and socket connection). In other examples, the generator 116 is connected to the component(s) 118 through a wireless connection. Energy generated by the generator 116 is supplied to the component(s) 118 through the wired or wireless connection(s).

As described herein, the energy harvester 112 harvests electrical power from the vacuum force of a vacuum toilet flush cycle generated by the vacuum flush system 110. In at least one example, the system 100 is configured to eliminate, minimize, or otherwise reduce airborne contaminants, which can be caused by a flush cycle. For example, energy harvester 112 can be disposed within or otherwise in fluid communication with ducting and venting that draws such contaminants away from the lavatory 102.

As described, in at least one example, the system 100 includes the toilet 108, and the energy harvester 112 coupled to the toilet 108. The energy harvester 112 is configured to convert vacuum force, which flushes contents from the toilet 108, into electrical energy. In at least one example, the energy harvester 112 is further configured to provide the electrical energy to one or more components 118. In at least one example, the system 100 also includes the vacuum flush system 110 coupled to the toilet 108. The vacuum flush system 110 is configured to generate the vacuum force. In at least one example, the energy harvester 112 includes the fan turbine 114, and the generator 116 coupled to the fan turbine 114.

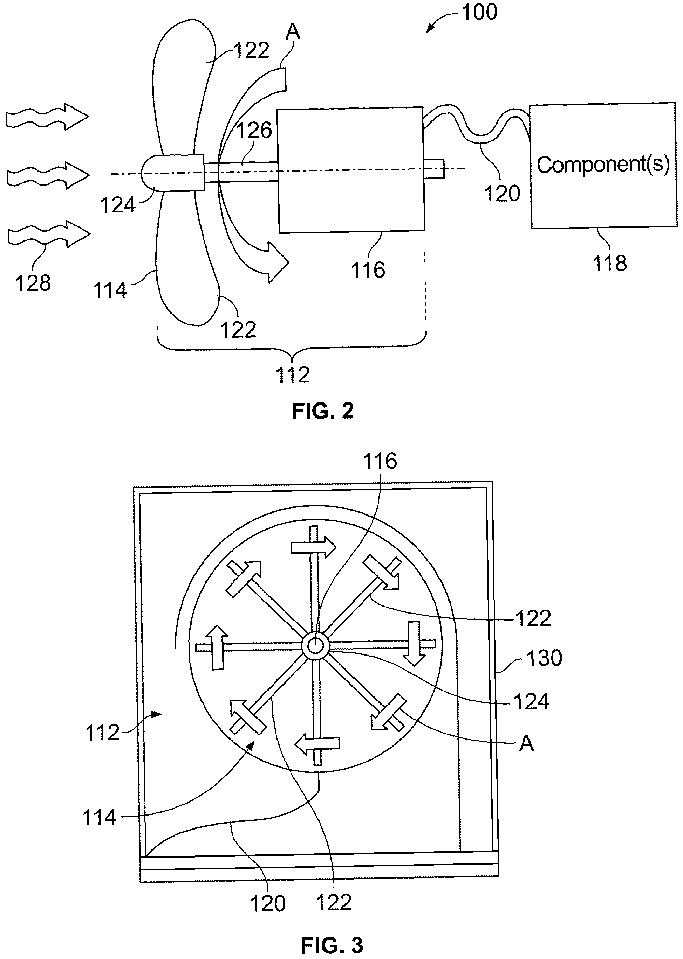

Figure 2 illustrates a simplified schematic diagram of the system 100 of Figure 1, according to an example of the present disclosure. Referring to Figures 1 and 2, the generator 116 is connected to one or more of the components 118 through a wired connection, such as a cable. An air vane 120 promotes air flow movement through one side of the fan turbine 114.

The fan turbine 114 includes a plurality of fan blades 122 connected to a hub 124, which in turn connects to an axle 126 that is operatively coupled to the generator 116. As the vacuum flush system 110 is activated, the vacuum force 128 is generated. The vacuum force 128 causes the fan blades 122 to rotate about the hub 124 in the direction of arc A. The rotation of the hub 124, in turn, causes the axle 126 to rotate, which, in turn, causes the generator 116 to convert such mechanical energy into electrical energy, which is then provided to the component(s) 118.

Figure 3 illustrates a front view of the energy harvester 112, according to an example of the present disclosure. In at least one example, the generator 116 can be disposed at (or optionally provide) the hub 124 of the fan turbine 114. The fan turbine 114 and the generator 116 can be disposed within a housing 130, such as a frame, which can be disposed within a conduit, such as a duct or vent.

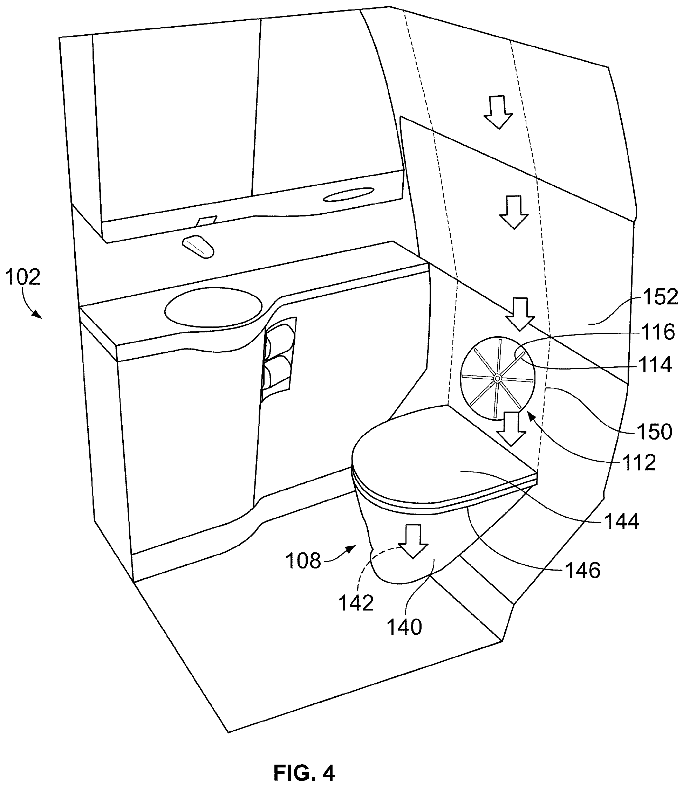

Figure 4 illustrates an internal view of the lavatory 102, according to an example of the present disclosure. The toilet 108 includes a toilet shroud 140 defining a basin 142. A lid 144 is pivotally coupled over a seat 146 of the basin 142. In at least one example, the energy harvester 112 is disposed within a conduit 150 (such as a duct or vent) formed within a wall 152 of the lavatory 102. The conduit 150 is in fluid communication with the basin 142, such as through a direct fluid connection or via an open air connection. As shown, the energy harvester 112 is upstream (that is, disposed within an air stream ahead of) the toilet 108. The vacuum flush system 110 is downstream from the toilet 108. The basin 142 of the toilet 108 is within an fluid circuit (for example, an air stream) between the energy harvester 112 (upstream from the basin 142) and the vacuum flush system 110 (downstream from the basin 142). The conduit 150 is ducted within the wall 152, and can be coupled to an upper crown of the internal cabin. The conduit 150 ducted into the wall 152 prevents, minimizes, or otherwise reduces the potential of airborne contaminants from escaping into a breathing space of the lavatory 102.

The fan turbine 114 and the generator 116 may be covered such as by a panel. Optionally, the fan turbine 114 and the generator 116 can be uncovered.

When the lid 144 of the toilet 108 is closed, the lid 144 sealingly engages a portion of the toilet 108 (such as the seat 146 and/or a toilet shroud 140), thereby forcing the vacuum energy to rotate the fan turbine 114.

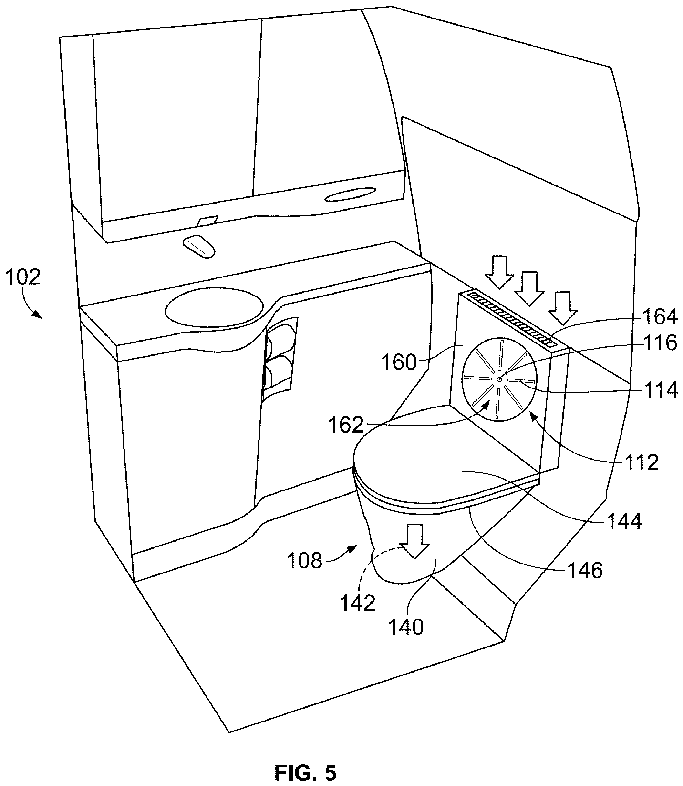

Figure 5 illustrates an internal view of the lavatory 102, according to an example of the present disclosure. In this and certain other examples, the energy harvester 112 includes a housing 160, which retains the fan turbine 114 and the generator 116 within a fluid channel 162 that is in fluid communication with the basin 142 of the toilet 108. The housing 160 is an example of the housing 130 shown in Figure 3. The housing 160 is secured to a portion of the toilet 108. The housing 160 can also include an air inlet 164 that provides a fluid path into the fluid channel 162. As shown, the energy harvester 112 is upstream from the toilet 108.

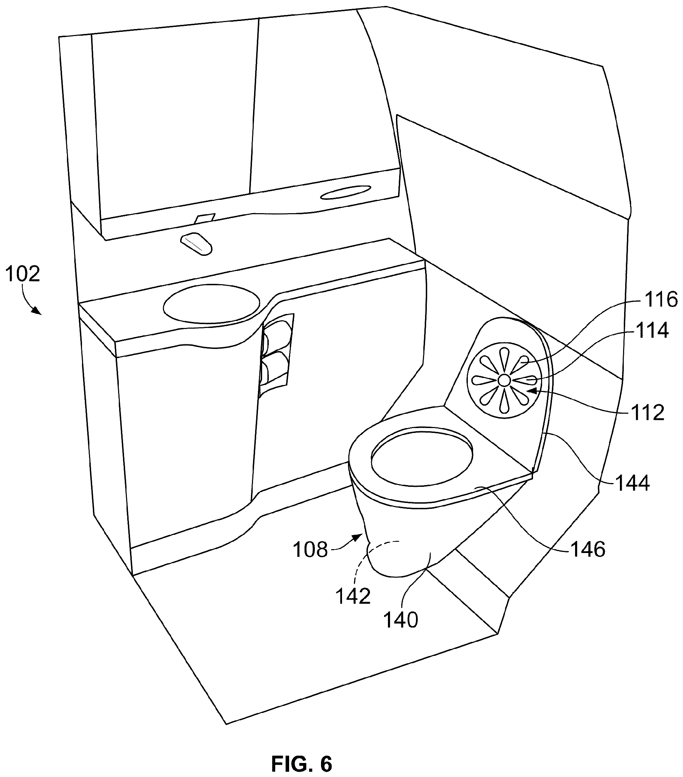

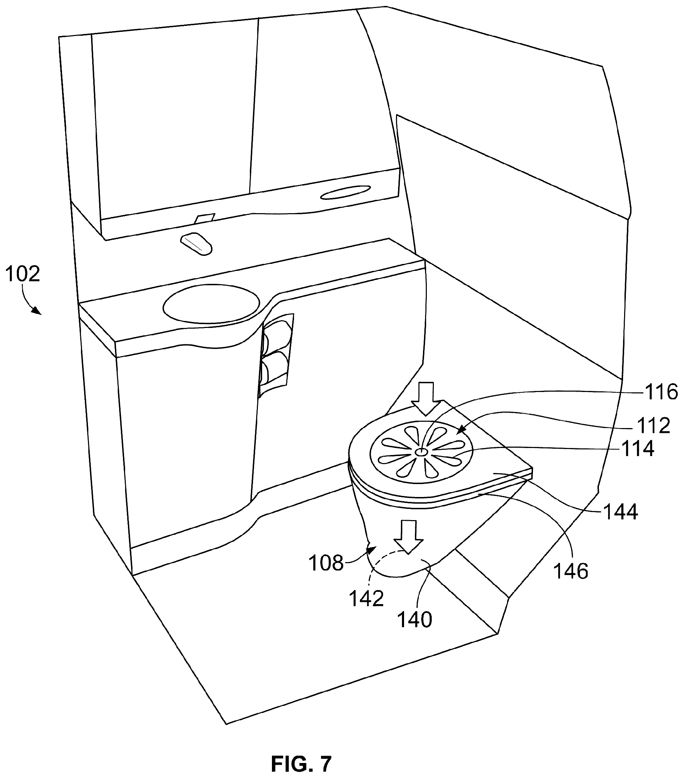

Figure 6 illustrates an internal view of the lavatory 102 having the lid 144 of the toilet 108 in an open position, according to an example of the present disclosure. Figure 7 illustrates an internal view of the lavatory 102 of Figure 6 having the lid 144 of the toilet 108 in a closed position. Referring to Figures 1, 6, and 7, the lid 144 can include the energy harvester 112. For example, the fan turbine 114 and the generator 116 can be secured on and/or within the lid 144.

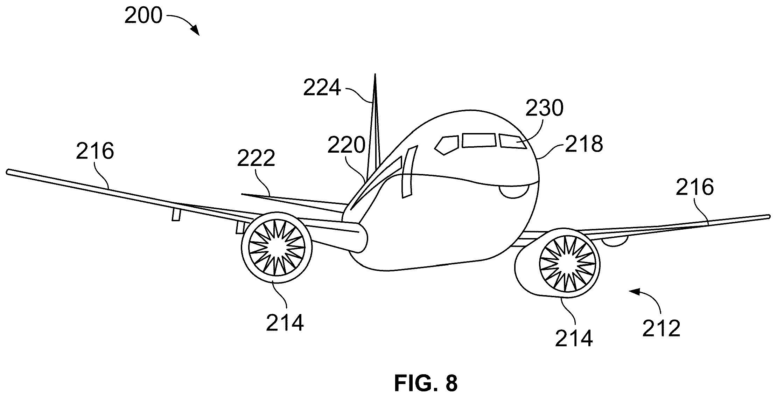

Figure 8 illustrates a perspective front view of an aircraft 200, according to an example of the present disclosure. The aircraft 200 is an example of the vehicle 106 shown in Figure 1. The aircraft 200 includes a propulsion system 212 that includes engines 214, for example. Optionally, the propulsion system 212 may include more engines 214 than shown. The engines 214 are carried by wings 216 of the aircraft 200. In other examples, the engines 214 may be carried by a fuselage 218 and/or an empennage 220. The empennage 220 may also support horizontal stabilizers 222 and a vertical stabilizer 224.

The fuselage 218 of the aircraft 200 defines an internal cabin 230, which includes a flight deck or cockpit, one or more work sections (for example, galleys, personnel carry-on baggage areas, and the like), one or more passenger sections (for example, first class, business class, and coach sections), one or more lavatories, and/or the like. The internal cabin 230 is an example of the internal cabin 104 shown in Figure 1.

Alternatively, instead of an aircraft, examples of the present disclosure may be used with various other vehicles, such as automobiles, buses, locomotives and train cars, watercraft, spacecraft, and the like. Also, examples of the present disclosure can be used in fixed structures, such as residential or commercial buildings.

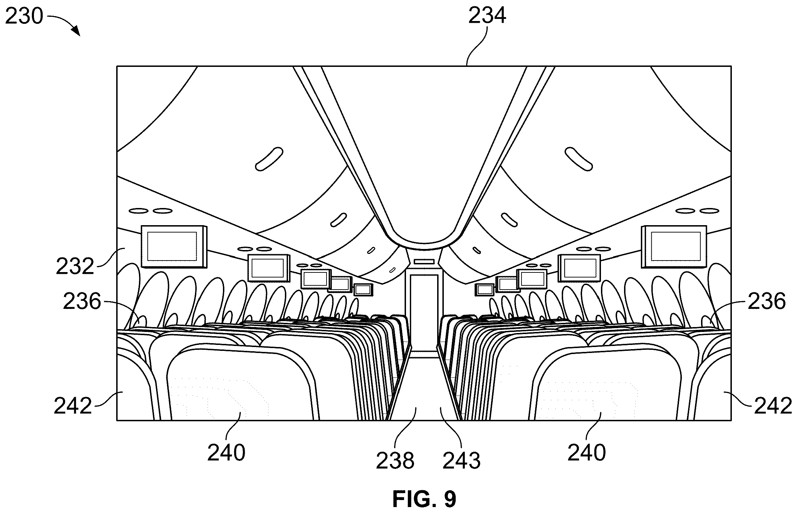

Figure 9 illustrates a perspective interior view of an internal cabin 230 of an aircraft 200, according to an example of the present disclosure. The internal cabin 230 includes outboard walls 232 and a ceiling 234. Windows 236 may be formed within the outboard walls 232. A floor 238 supports rows of seats 240. As shown in Figure 9, a row 242 may include three seats 240 on either side of an aisle 243. However, the row 242 may include more or fewer seats 240 than shown. Additionally, the internal cabin 230 may include more aisles than shown.

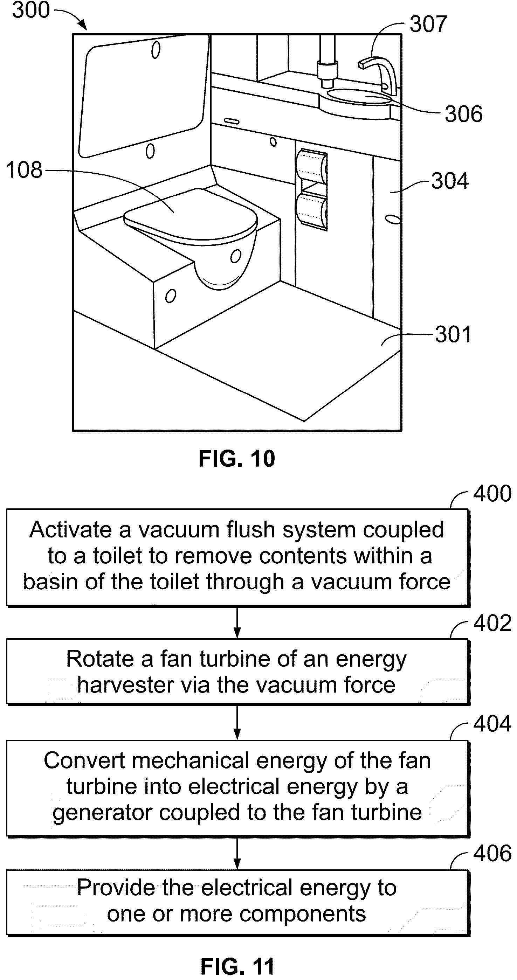

Figure 10 illustrates an isometric internal view of a lavatory 300, according to an example of the present disclosure. The lavatory 300 is an example of the lavatory 102 shown in Figure 1. In at least one example, the lavatory 300 can be disposed within an internal cabin of an aircraft. Optionally, the lavatory 300 may be onboard various other vehicles. In other examples, the lavatory 300 may be within a fixed structure, such as a commercial or residential building. The lavatory 300 includes a base floor 301 that supports a toilet 108, one or more cabinets 304, a sink 306 or wash basin, and a faucet 307. The lavatory 300 may be arranged differently than shown. The lavatory 300 may include more or fewer components than shown.

Figure 11 illustrates a flow chart of a method, according to an example of the present disclosure. Referring to Figures 1 and 11, at 400, the vacuum flush system 110 coupled to the toilet 108 is activated to remove contents within a basin of the toilet 108 through a vacuum force (such as suction). For example, a button or handle of the toilet 108 can be engaged to activate the vacuum flush system 110. In other examples, the toilet 108 can include a sensor configured to detect motion to activate the vacuum flush system 110 in a touchless manner.

At 402, the vacuum force generated by the vacuum flush system rotates the fan turbine 114 of the energy harvester 112. At 404, the mechanical energy (rotation) of the fan turbine 114 is converted into electrical energy by the generator 116 coupled to the fan turbine 114. At 406, the electrical energy generated by the generator 116 is then provided to one or more components 118.

Further, the disclosure comprises examples according to the following clauses:
Clause 1. A system comprising: a toilet; and an energy harvester coupled to the toilet, wherein the energy harvester is configured to convert vacuum force, which flushes contents from the toilet, into electrical energy.
Clause 2. The system of Clause 1, wherein the energy harvester is further configured to provide the electrical energy to one or more components.
Clause 3. The system of Clause 2, further comprising a wired connection between the energy harvester and the one or more components.
Clause 4. The system of Clauses 2 or 3, wherein the one or more components comprise one or more of: one or more motors; one or more pumps; one or more sensors; one or more lights; one or more chargers; or one or more energy storage devices.
Clause 5. The system of any of Clauses 1-4, further comprising a vacuum flush system coupled to the toilet, wherein the vacuum flush system is configured to generate the vacuum force.
Clause 6. The system of any of Clauses 1-5, wherein the energy harvester comprises: a fan turbine; and a generator coupled to the fan turbine.
Clause 7. The system of any of Clauses 1-6, wherein the energy harvester is disposed within a conduit secured to a wall.
Clause 8. The system of any of Clauses 1-6, wherein the energy harvester comprises a housing secured to the toilet.
Clause 9. The system of any of Clauses 1-6, wherein the toilet comprises a lid, and wherein the lid comprises the energy harvester.
Clause 10. A vehicle comprising: an internal cabin; a lavatory within the internal cabin, wherein the lavatory comprises: a toilet; and an energy harvester coupled to the toilet, wherein the energy harvester is configured to convert vacuum force, which flushes contents from the toilet, into electrical energy, and wherein the energy harvester is further configured to provide the electrical energy to one or more components.
Clause 11. The vehicle of Clause 10, further comprising a wired connection between the energy harvester and the one or more components.
Clause 12. The vehicle of Clauses 10 or 11, wherein the one or more components comprise one or more of: one or more motors; one or more pumps; one or more sensors; one or more lights; one or more chargers; or one or more energy storage devices.
Clause 13. The vehicle of any of Clauses 10-12, further comprising a vacuum flush system coupled to the toilet, wherein the vacuum flush system is configured to generate the vacuum force.
Clause 14. The vehicle of any of Clauses 10-13, wherein the energy harvester comprises: a fan turbine; and a generator coupled to the fan turbine.
Clause 15. The vehicle of any of Clauses 10-14, wherein the energy harvester is disposed within a conduit secured to a wall of the lavatory.
Clause 16. The vehicle of any of Clauses 10-14, wherein the energy harvester comprises a housing secured to the toilet.
Clause 17. The vehicle of any of Clauses 10-14, wherein the toilet comprises a lid, and wherein the lid comprises the energy harvester.
Clause 18. A method for a system comprising: a toilet; and an energy harvester coupled to the toilet, the method comprising: converting, by the energy harvester, vacuum force, which flushes contents from the toilet, into electrical energy.
Clause 19. The method of Clause 18, further comprising providing, by the energy harvester, the electrical energy to one or more components.
Clause 20. The method of Clauses 18 or 19, further comprising generating, by a vacuum flush system coupled to the toilet, the vacuum force.

As described herein, examples of the present disclosure provide systems and methods for efficiently and effectively powering components, such as within a lavatory of an aircraft. Further, examples of the present disclosure provide systems and methods which eliminate, minimize, or otherwise reduce the need for batteries to power certain components. Additionally, examples of the present disclosure provide systems and methods for providing power to components within an aircraft, which do not increase the overall power draw of main or auxiliary power sources of the aircraft.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or features thereof) can be used in combination with each other. In addition, many modifications can be made to adapt a particular situation or material to the teachings of the various examples of the disclosure without departing from the scope of the appended claims. While the dimensions and types of materials described herein are intended to define the parameters of the various examples of the disclosure, the examples are by no means limiting. Many other examples will be apparent to those of skill in the art upon reviewing the above description. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written discloses various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art.

## Claims

1. A system (100) comprising:
a toilet (108); and
an energy harvester (112) coupled to the toilet (108), wherein the energy harvester (112) is configured to convert vacuum force (128), which flushes contents from the toilet (108), into electrical energy.

2. The system (100) of claim 1, wherein the energy harvester (112) is further configured to provide the electrical energy to one or more components (118).

3. The system (100) of claim 2, further comprising a wired connection between the energy harvester (112) and the one or more components (118).

4. The system (100) of claim 2 or 3, wherein the one or more components (118) comprise one or more of:
one or more motors (118a);
one or more pumps (118b);
one or more sensors (118c);
one or more lights (118d);
one or more chargers; or
one or more energy storage devices (118f).

5. The system (100) of any preceding claim, further comprising a vacuum flush system (110) coupled to the toilet (108), wherein the vacuum flush system (110) is configured to generate the vacuum force (128).

6. The system (100) of any preceding claim, wherein the energy harvester (112) comprises:
a fan turbine (114); and
a generator (116) coupled to the fan turbine (114).

7. The system (100) of any preceding claim, wherein the energy harvester (112) is disposed within a conduit (150) secured to a wall (152).

8. The system (100) of any of claims 1 to 6, wherein the energy harvester (112) comprises a housing (130) secured to the toilet (108).

9. The system (100) of any of claims 1 to 8, wherein the toilet (108) comprises a lid (144), and wherein the lid (144) comprises the energy harvester (112).

10. A vehicle (106) comprising:
an internal cabin (104,230);
a lavatory (102,300) within the internal cabin (104,230), wherein the lavatory (102,300) comprises the system (100) of any preceding claim.

11. The vehicle (106) of claim 10, wherein the vehicle (106) is an aircraft (200).

12. A method for a system (100) comprising a toilet (108) and an energy harvester (112) coupled to the toilet (108), the method comprising:
converting, by the energy harvester (112), vacuum force (128), which flushes contents from the toilet (108), into electrical energy.

13. The method of claim 12, further comprising providing, by the energy harvester (112), the electrical energy to one or more components (118).

14. The method of claim 12 or 13, further comprising generating, by a vacuum flush system (110) coupled to the toilet (108), the vacuum force (128).

15. The method of any of claims 12 to 14, wherein the system (100) is located in an internal cabin (104,230) of a vehicle (106), for example an aircraft (200).
